(19) Europäisches Patentamt
European Patent Office
Office européen des brevets

(11) **EP 3 053 981 B1**

(12) **EUROPEAN PATENT SPECIFICATION**

(45) Date of publication and mention
of the grant of the patent:
**03.04.2019 Bulletin 2019/14**

(21) Application number: **14850826.0**

(22) Date of filing: **06.10.2014**

(51) Int Cl.:
*C09K 5/02* $^{(2006.01)}$     *C01G 23/04* $^{(2006.01)}$
*F28D 20/00* $^{(2006.01)}$

(86) International application number:
**PCT/JP2014/076667**

(87) International publication number:
**WO 2015/050269 (09.04.2015 Gazette 2015/14)**

(54) **USE OF HEAT STORAGE/DISSIPATION MATERIAL AND HEAT STORAGE/DISSIPATION SYSTEM**

VERWENDUNG VON WÄRMESPEICHERUNGS-/ABSCHWÄCHUNGSMATERIAL UND WÄRMESPEICHERUNGS-/ABSCHWÄCHUNGSSYSTEM

UTILISATION D'UN MATÉRIAU DE STOCKAGE/DISSIPATION DE CHALEUR ET SYSTÈME DE STOCKAGE/DISSIPATION DE CHALEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.10.2013 JP 2013209103**

(43) Date of publication of application:
**10.08.2016 Bulletin 2016/32**

(73) Proprietor: **The University of Tokyo**
**Tokyo 113-8654 (JP)**

(72) Inventors:
• **OHKOSHI Shin-ichi**
**Tokyo 113-8654 (JP)**
• **TOKORO Hiroko**
**Tokyo 113-8654 (JP)**
• **YOSHIKIYO Marie**
**Tokyo 113-8654 (JP)**
• **NAMAI Asuka**
**Tokyo 113-8654 (JP)**

(74) Representative: **Beetz & Partner mbB**
**Patentanwälte**
**Steinsdorfstraße 10**
**80538 München (DE)**

(56) References cited:
**EP-A1- 2 371 767        EP-A1- 2 573 048**
**WO-A1-2007/037332    JP-A- 2005 036 213**
**JP-A- 2014 210 835     US-A1- 2011 204 278**

**Description**

The present invention relates to the use of a heat storage/dissipation material and a heat storage/dissipation system, and a method for storing/dissipating heat using heat storage/dissipation material.

Concrete has a property of enabling storage of heat that is applied by heating (see, for example, Cement Sales Engineering Division, Sumitomo Osaka Cement Co., Ltd. "Thermal Properties of Concrete" [on line], searched on October, 1 2013, internet <URL: http://www.soc.co.jp/cement/gijutsu/pdf/netu.pdf>), and therefore has conventionally been used as a heat storage/dissipation material conducting heat storage and heat dissipation in various fields, such as construction and civil engineering.

However, the heat storage/dissipation material formed from concrete releases stored heat immediately after completion of heating, and therefore utilization thereof is limited to heat storage/dissipation systems that make use of heat immediately after heat storage.

EP 2 371 767 B1 discloses that $Ti_3O_5$ can assume various different crystal structures and can be caused to transit from one structure to the other under the influence of heat and/or laser radiation.

The object of the present invention is to provide means for heat storage/dissipation that can release stored heat at a desired timing. This object is achieved by a use of a heat storage/dissipation material as defined in claim 1, a method for storing/dissipating heat as defined in claim 2 and a heat storage/dissipation system as defined in claim 10.

A heat storage/dissipation material for use in the present invention contains heat storage/dissipation titanium oxide having a composition of $Ti_3O_5$, and not undergoing phase transition into a β-phase that has properties of a non-magnetic semiconductor and maintaining a state of a paramagnetic metal as long as the heat storage/dissipation titanium oxide is not subjected to pressure or light for heat dissipation, wherein the pressure or the light for heat dissipation is applied to the heat storage/dissipation titanium oxide to cause the phase transition to the β-phase and release heat stored in the heat storage/dissipation titanium oxide.

Moreover, the heat storage/dissipation system according to the present invention includes a heat storage apparatus heating said heat storage/dissipation material or irradiating the heat storage/dissipation material with light for heat storage to store heat in the heat storage/dissipation material, a heat dissipation apparatus applying pressure to or irradiating, with light for heat dissipation, the heat storage/dissipation material storing the heat caused by the heat storage apparatus, to allow the heat storage/dissipation material to release the heat, and a flow channel feeding the heat storage/dissipation material discharged from the heat storage apparatus to the heat dissipation apparatus; and returning the heat storage/dissipation material discharged from the heat dissipation apparatus to the heat storage apparatus, the heat storage/dissipation material having a constitution wherein heat storage/dissipation titanium oxide is dispersed in a heat transfer member in a liquid form.

Advantageous Effect of Invention

According to the present invention, a state of storing heat can be maintained as it is as long as pressure or light for heat dissipation is applied, heat can be released when pressure or light for heat dissipation is applied, and therefore stored heat can be released at a desired timing.

Brief Description of Drawings

FIG. 1 is a graph schematically illustrating the relationship between magnetic susceptibility and temperature, and changes among crystal structures.
FIG. 2A is a graph showing an SR-XRPD pattern of a λ-phase, FIG. 2B is a crystal structure of the λ-phase, and FIG. 2C is an electron density distribution of the λ-phase.
FIG. 3A is a graph showing an SR-XRPD pattern of a β-phase, FIG. 3B is a crystal structure of the β-phase, and FIG. 3C is an electron density distribution of the β-phase.
FIG. 4A is a graph showing SR-XRPD patterns of heat storage/dissipation titanium oxide when predetermined pressures are applied, FIG. 4B is a graph showing fractions of the λ-phase, and FIG. 4C is a graph showing fractions of the β-phase.
FIG. 5 is a graph showing the relationship between unit cell volume of a λ-phase and a β-phase and pressure.
FIG. 6A is a graph showing the relationship between Gibbs free energy and a fraction of a charge-delocalized unit as pressure is increased, FIG. 6B is a graph showing the relationship between the fraction of the charge-delocalized unit and pressure, and FIG. 6C is a graph showing the relationship between Gibbs free energy and the fraction of the charge-delocalized unit as pressure is decreased.

FIG. 7A shows photographs taken when phase transitions into a λ-phase and into a β-phase occur, FIG. 7B illustrates graphs each showing a differential XRD pattern that shows phase transitions of the λ-phase and the β-phase, FIG. 7C is a diagram explaining crystal structures when phase transitions into the λ-phase and into the β-phase occur, and FIG. 7D illustrates graphs each showing the relationship between Gibbs free energy and a fraction of a charge-delocalized unit when pressure is applied and when irradiation with light is conducted.

FIG. 8 is a schematic diagram illustrating the whole constitution of a heat storage/dissipation system according to the present invention.

FIG. 9A shows photographs taken when phase transitions into a λ-phase and into a β-phase occur, FIG. 9B illustrates graphs each showing an XRPD pattern of the λ-phase and the β-phase, FIG. 9C is a diagram explaining crystal structures when phase transitions into the λ-phase and into the β-phase occur, and FIG. 9D shows graphs each showing the relationship between Gibbs free energy and a fraction of a charge-delocalized unit when pressure is applied and when a current is supplied.

Description of Embodiments

Hereinafter, embodiments according to the present invention will be described in detail with reference to the drawings.

(1) Overview of Heat Storage/Dissipation Material

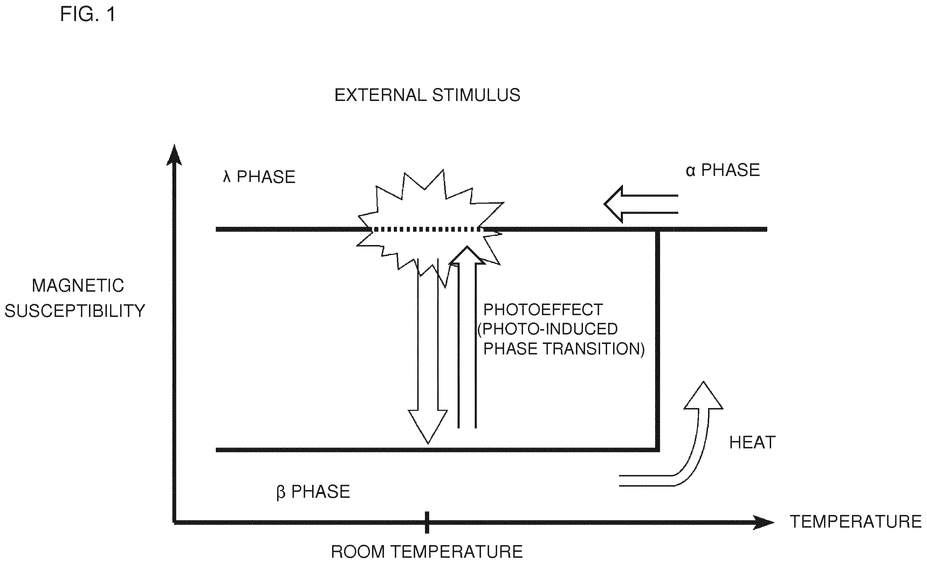

The heat storage/dissipation material contains heat storage/dissipation titanium oxide having a composition of $Ti_3O_5$, and the heat storage/dissipation titanium oxide is contained so as to be dispersed in heat transfer oil in a liquid form, such as, for example, silicone oil, ester-based oil, or phenyl ether-based oil. Here, the heat storage/dissipation titanium oxide in a powder form contained in the heat storage/dissipation material according to the present invention can be a crystal phase (hereinafter, referred to as λ-phase or also as λ-$Ti_3O_5$) of a monoclinic system in which $Ti_3O_5$ maintains a state of a paramagnetic metal in a temperature region of 460 [K] or lower as shown in FIG. 1. Moreover, in a case where temperature is increased in the λ-phase, the phase transition of the heat storage/dissipation titanium oxide into an α-phase (α-$Ti_3O_5$) of an orthorhombic system of a state of a paramagnetic metal occurs at a temperature exceeding about 460 [K].

Incidentally, it has been confirmed that the crystal structure of general titanium oxide having a composition of $Ti_3O_5$ becomes the α-phase when the temperature is higher than about 460 [K], but becomes a β-phase (β-$Ti_3O_5$) in which the crystal structure has properties of a non-magnetic semiconductor when the temperature is lower than about 460 [K]. That is to say, conventional titanium oxide that becomes the β-phase in a temperature region lower than about 460 [K] has a crystal structure of a monoclinic system and can be a non-magnetic semiconductor at around 0 [K] although a slight magnetization due to Curie's paramagnetism that is attributable to lattice defect is observed.

On the other hand, after the crystal structure becomes the α-phase, the phase transition of the heat storage/dissipation titanium oxide contained in the heat storage/dissipation material according to the present invention into the λ-phase of a state of a paramagnetic metal occurs, unlike conventional titanium oxide, even when the temperature is decreased to be lower than 460 [K], without the phase transition into the β-phase having properties of a non-magnetic semiconductor. In addition, the heat storage/dissipation titanium oxide that has undergone the phase transition into the β-phase by applying pressure to the λ-phase or irradiating the λ-phase with light for heat dissipation is capable of storing heat when the temperature becomes 460 [K] or higher by heating or irradiation with light for heat storage, and thereafter undergoes the phase transition into the λ-phase at lower than 460 [K] to be capable of maintaining a state of latently storing heat even in a situation where the temperature becomes low.

In addition to the above-described constitution, the heat storage/dissipation titanium oxide is capable of the phase transition into the β-phase that has properties of a non-magnetic semiconductor from the λ-phase of the state of a paramagnetic metal when the heat storage/dissipation titanium oxide is in the λ-phase and is subjected to an external stimulus that is either the pressure or the light for heat dissipation. Moreover, when the heat storage/dissipation titanium oxide undergoes the phase transition into the β-phase caused by an external stimulus, the heat storage/dissipation titanium oxide is capable of generating heat by releasing heat that is latently stored in the λ-phase.

Furthermore, after the phase transition into the β-phase, the heat storage/dissipation titanium oxide undergoes the phase transition into the α-phase to store heat that is applied by heating when the temperature becomes 460 [K] or higher and thereafter undergoes the phase transition into the λ-phase at lower than 460 [K] and is capable of maintaining a state of latently storing heat even in a situation where the temperature becomes low. In this way, the heat storage/dissipation titanium oxide is capable of releasing heat when the heat storage/dissipation titanium oxide undergoes the phase transition into the β-phase from the λ-phase by an external stimulus and is able to latently store heat again by heating thereafter and is capable of repeating heat storage by heating and heat dissipation by applying the external stimulus.

Moreover, the heat storage/dissipation titanium oxide gets into the state of storing heat by being heated at 460 [K] or higher, and besides, is able to get into the state of storing heat when irradiated with light for heat storage having a particular wavelength. Practically, the heat storage/dissipation titanium oxide undergoes photo-induced phase transition into the λ-phase directly from the β-phase when the heat storage/dissipation titanium oxide is in the β-phase and is irradiated with the light for heat storage, and can be in the λ-phase in which heat is latently stored by provision of energy from the light for heat storage. Thereafter, the heat storage/dissipation titanium oxide can release heat when the heat storage/dissipation titanium oxide undergoes the phase transition into the β-phase from the λ-phase by the external stimulus in the same manner as described above. Thus, the heat storage/dissipation titanium oxide is capable of repeatedly conducting heat storage by irradiation with light for heat storage and heat dissipation by applying the external stimulus.

The heat storage/dissipation titanium oxide contained in the heat storage/dissipation material according to the present invention may be heat storage/dissipation titanium oxide using any of anatase type titanium oxide and rutile type titanium oxide as a starting material, but will be described hereinafter giving, as an example, the heat storage/dissipation titanium oxide using anatase type titanium oxide as a starting material.

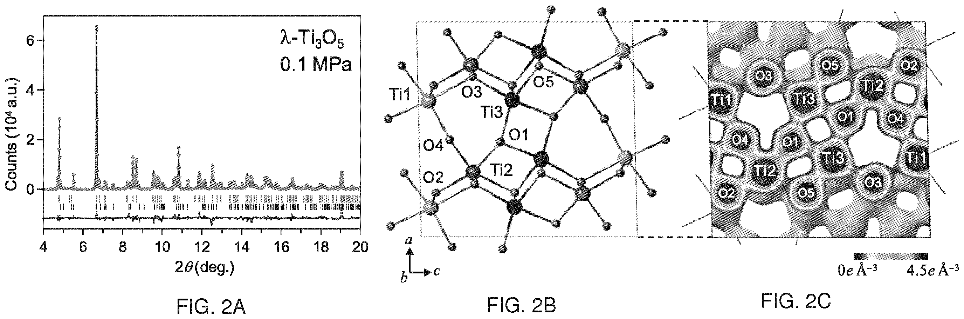

FIG. 2A shows an SR-XRPD (Synchrotron Radiation X-Ray Powder Diffraction) pattern of the heat storage/dissipation titanium oxide at room temperature under atmospheric pressure (0.1 [MPa]). In this case, the heat storage/dissipation titanium oxide is constituted from a crystal structure of the λ-phase, and as a result of analyzing the SR-XRPD pattern in FIG. 2A, it was found that the λ-phase was a monoclinic system, belonged to a space group C2/m, had lattice constants of a = 9.8330(2) Å, b = 3.78509(6) Å, and c = 9.9667(3) Å, had a unit lattice volume of 370.859(12) Å$^3$, and had Rwp = 2.404 [%] and Rexp = 0.863 [%] (where Rwp and Rexp each represent a reliability factor showing validity of a crystal structure model).

It is to be noted here that a crystal structure can be said to be the crystal structure of the λ-phase when the lattice constants are a = 9.8330(2) ± 0.1 Å, b = 3.78509(6) ± 0.1 Å, and c = 9.9667(3) ± 0.3 Å.

Moreover, FIG. 2B is the crystal structure of the λ-phase observed from the b axis direction and FIG. 2C is an electron density distribution of the λ-phase. The λ-phase contained three Ti sites (Ti1, Ti2, and Ti3) and five 0 sites (01, 02, 03, 04, and 05) each having symmetry not equivalent to one another, and Ti formed a distorted six-coordinate octahedral structure.

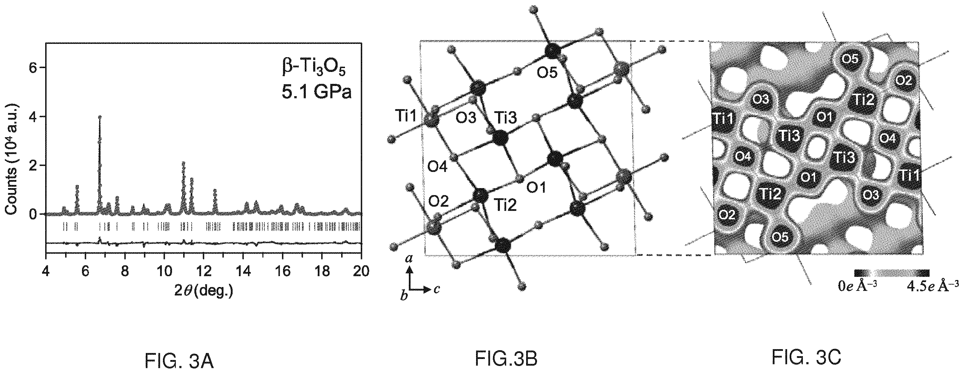

On the other hand, it was confirmed that when a pressure of 5.1 [GPa] was applied to the heat storage/dissipation titanium oxide of the λ-phase at room temperature, an SR-XRPD pattern that was different from the SR-XRPD of the λ-phase (FIG. 2A) was obtained as shown in FIG. 3A and the heat storage/dissipation titanium oxide underwent the phase transition into the β-phase. As a result of analyzing the SR-XRPD in FIG. 3A, it was found that the β-phase was a monoclinic system, belonged to a space group C2/m, had lattice constants of a = 9.6416(4) Å, b = 3.78376(9) Å, and c = 9.3584(4) Å, had a unit lattice volume of 341.33(2) Å$^3$, and had Rwp = 2.231 [%] and Rexp = 0.935 [%].

Moreover, FIG. 3B is the crystal structure of the β-phase observed from the b axis direction and FIG. 3C is an electron density distribution of the β-phase. The β-phase also contained three Ti sites (Ti1, Ti2, and Ti3) and five O sites (O1, O2, O3, O4, and O5) each having symmetry not equivalent to one another, and Ti formed a distorted six-coordinate octahedral structure.

The main difference between the β-phase and the λ-phase resides in the coordination structure of Ti3, and Ti3 in the λ-phase forms bonds with two O1, one O3, and three 05; however, Ti3 in the β-phase forms bonds with two O1, one O3, one O4, and two O5. Accordingly, one of Ti3-O5 bonds in the λ-phase is replaced by one Ti3-O4 bond in the β-phase. In this way, the structure of the heat storage/dissipation titanium oxide is different between the λ-phase and in the β-phase.

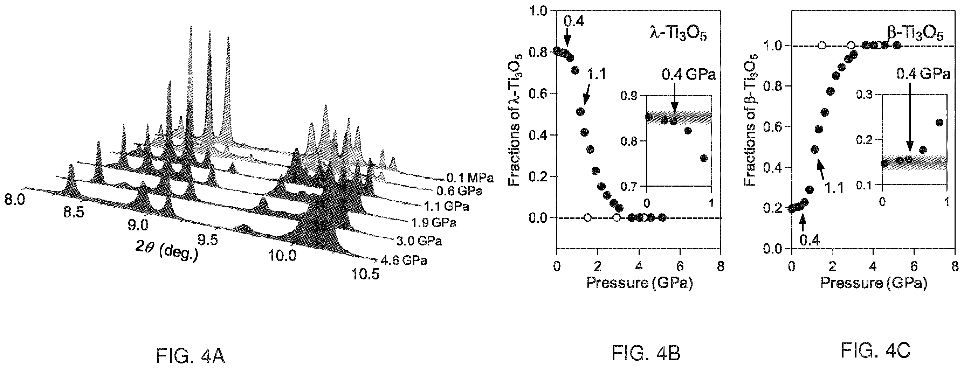

Subsequently, studies on the fractions of the λ-phase and of the β-phase when pressure was applied to the heat storage/dissipation titanium oxide was conducted to obtain the results as shown in FIG. 4A, FIG. 4B, and FIG. 4C. FIG. 4A shows SR-XRPD patterns when the pressures of 0.1 [MPa], 0.6 [GPa], 1.1 [GPa], 1.9 [GPa], 3.0 [GPa], and 4.6 [MPa] were applied in this order. From FIG. 4A, it was confirmed that the intensity of the peaks representing the crystal structure of the λ-phase gradually decreased while the intensity of the peaks representing the crystal structure of the β-phase gradually increased as the pressure became large.

When the SR-XRPD patterns shown in FIG. 4A were analyzed by a Rietveld method, a result as shown in FIG. 4B was obtained with regard to the λ-phase, and on the other hand, a result as shown in FIG. 4C was obtained with regard to the β-phase. As shown in FIG. 4B, when a pressure of 0.4 [GPa] is applied, the λ-phase begins to decrease and the phase transition of the crystal structure into the β-phase begins, when a pressure of 1.1 [GPa] is applied, the fraction of the λ-phase decreases from about 0.8 at the beginning to 0.5, and when a pressure of 3.7 [GPa] or more is finally applied, the fraction of the λ-phase in the crystal structure becomes almost 0.

As shown in FIG. 4C, when a pressure of 0.4 [GPa] is applied, the β-phase begins to increase and the phase transition of the crystal structure from the λ-phase begins; when a pressure of 1.1 [GPa] is applied, the fraction of the β-phase increases from about 0.2 at the beginning to 0.5; and when a pressure of 3.7 [GPa] or more is finally applied, almost all the crystal structures become the β-phase. Accordingly, in order to cause the phase transition of the heat storage/dissipation titanium oxide into the β-phase from the λ-phase by applying pressure, it is desirable to apply a pressure of 0.4 [GPa] or more, preferably 1.1 [GPa] or more, more preferably 3.7[GPa] or more.

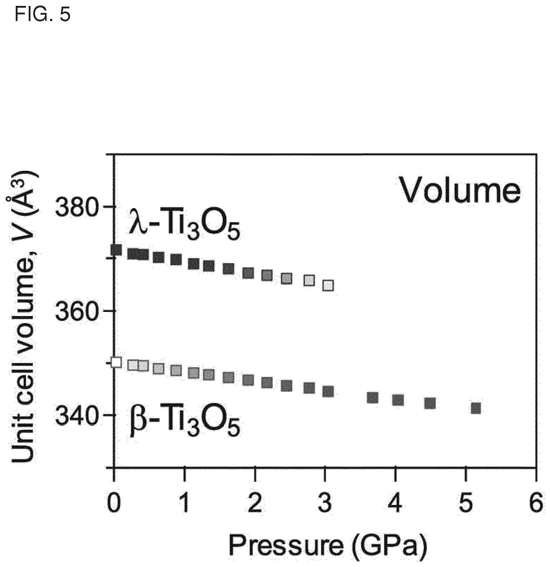

FIG. 5 is a graph showing unit cell volumes of the λ-phase and of the β-phase of the heat storage/dissipation titanium oxide, the unit cell volumes changing depending on the pressure. As shown in FIG. 5, the unit cell volumes of the λ-phase and of the β-phase gradually become small as the pressure is increased; however, the volume difference between the λ-phase and the β-phase is maintained. In order to understand the phase transition into the β-phase from the λ-phase, the relationship between the Gibbs free energy and a fraction of a charge-delocalized unit (x) was calculated here using a Slichter and Drickamer model as a mean field theoretical model. It is to be noted here that the phase transition into the β-phase from the λ-phase was regarded as phase transition into a charge-localized system (also simply referred to as localized system) from a charge-delocalized system (also simply referred to as delocalized system). In accordance with this, the ratio of a charge-localized unit $(Ti^{3+} - Ti^{11/3+} - Ti^{10/3+}) O_5$ to a charge-delocalized unit $(Ti^{10/3+})_3 O_5$ was considered to be an order parameter. Here, the Gibbs free energy G in the phase transition into the β-phase from the λ-phase is described as the following formula.

$$G = x\Delta H + \gamma x(1-x) + T[R[x \ln x + (1-x) \ln (1-x)] - x\Delta S]$$

In this case, the Gibbs free energy G of the β-phase (charge-localized system) under atmospheric pressure is taken as a basis of energy, x represents a fraction of the charge-delocalized unit, ΔH represents transition enthalpy, ΔS represents transition entropy, R represents a gas constant, γ represents an interaction parameter, and T represents temperature.

In order to check an effect of pressure on the Gibbs free energy G, first-principle phonon mode calculation was conducted under 0 [GPa] and 1 [GPa] at 300 [K]. The calculation results showed that the difference between the enthalpy under 0 [GPa] and the enthalpy under 1 [GPa] was 0.535 [kJ mol$^{-1}$] and the difference between the entropy under 0 [GPa] and the entropy under 1 [GPa] was -2.056 [J K$^{-1}$] in the case of the λ-phase. Moreover, the difference between the enthalpy under 0 [GPa] and the enthalpy under 1 [GPa] was 0.516 [kJ mol$^{-1}$] and the difference between the entropy under 0 [GPa] and the entropy under 1 [GPa] was -0.945 [JK$^{-1}$] in the case of the β-phase.

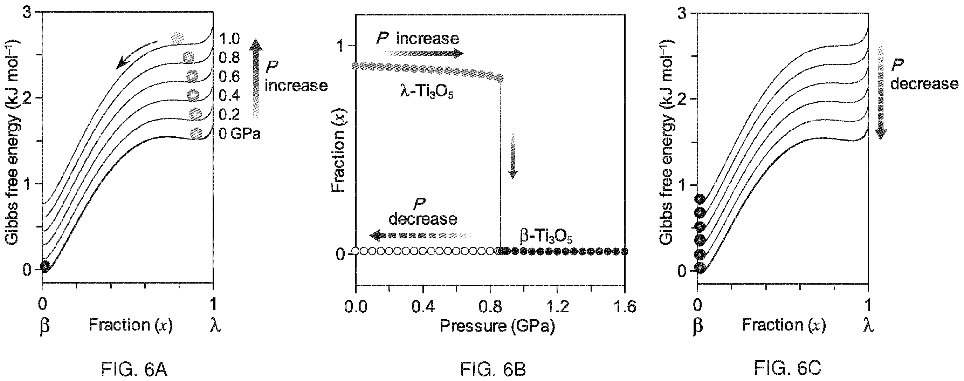

FIG. 6A shows curves of the Gibbs free energy G determined by the calculation versus the fraction x of the charge-delocalized unit, the curves obtained as the pressure is increased. For the calculation under a pressure of 0 [GPa], values of the transition enthalpy ΔH and transition entropy ΔS obtained as measured values by conducting DSC measurement of a sample were used, and the value of the interaction parameter γ determined by fitting the temperature dependence of the measured magnetic susceptibility using the transition enthalpy ΔH and transition entropy ΔS. With regard to the changes in the transition enthalpy ΔH and in the transition entropy ΔS when the pressure was applied, the values evaluated by the first-principle phonon mode calculation were used. In the heat storage/dissipation titanium oxide, the transition enthalpy ΔH increases and the transition entropy ΔS decreases when pressure is applied from outside, and therefore the Gibbs free energy G increases as shown in FIG. 6A.

A decrease in the transition entropy ΔS in the λ-phase is larger than that in the β-phase, and therefore an increase in the Gibbs free energy G in the λ-phase is larger than that in the β-phase. From this fact, it can be said that the phase transition due to the pressure at the transition pressure $(P_{\lambda \to \beta})$ is reproduced by the model shown in FIG. 6A. As shown in FIG. 6A and FIG. 6B, as the applied pressure is increased, the phase transition into the β-phase from the λ-phase occurs because an energy barrier disappears. On the other hand, as shown in FIG.6C, the β-phase generated by applying pressure is a thermodynamically stable phase, and therefore stays as it is even after the pressure is released.

Application of the pressure or the light for heat dissipation causes the phase transition of the crystal structure of the heat storage/dissipation titanium oxide into the β-phase from the λ-phase, and the heat storage/dissipation titanium oxide is capable of releasing stored heat when the phase transition into the β-phase from the λ-phase occurs. Moreover, the heat storage/dissipation titanium oxide does not release heat and continuously maintains the state of storing heat as it is as long as the heat storage/dissipation titanium oxide is not subjected to the pressure or the light for heat dissipation, and is capable of releasing the stored heat by the phase transition into the β-phase from the λ-phase for the first time at a timing when the heat storage/dissipation titanium oxide is subjected to the pressure or the light for heat dissipation.

Moreover, after the heat is released by the phase transition into the β-phase from the λ-phase caused by being subjected to the pressure or the light for heat dissipation in such a manner as described above, the phase transition of the heat storage/dissipation titanium oxide into the α-phase from the β-phase occurs at a temperature exceeding about 460 [K] as described above. At this time, the heat storage/dissipation titanium oxide stores heat again when the temperature becomes 460 [K] or higher and is capable of maintaining the state of storing heat as it is even when cooled to room temperature.

The heat storage/dissipation titanium oxide can store heat by heating at 460 [K] or higher as described above, and besides, undergoes the phase transition of the crystal structure into the λ-phase from the β-phase also when light for heat storage, such as ultraviolet light, visible light, and infrared light (light intensity of $0.5 \times 10^2$ to $15 \times 10^2$ [mJ cm$^{-2}$ pulse$^{-1}$], more preferably $1 \times 10^2$ to $10 \times 10^2$ [mJ cm$^{-2}$ pulse$^{-1}$]), and furthermore, can get into the state of storing heat based on the energy received from the light for heat storage. Incidentally, embodiments in which the phase transition into the λ-phase of the state of storing heat from the β-phase is caused by photoirradiation include a "photothermal effect" in which the heat storage/dissipation titanium oxide is heated by the light for heat storage to temporarily become the α-phase and get into the state of storing heat, and a "photoirradiation effect" (photo-induced phase transition mechanism making use of properties of a photon of light) in which the β-phase directly changes into the λ-phase by the light for heat storage, not through the α-phase, to get into the state of storing heat.

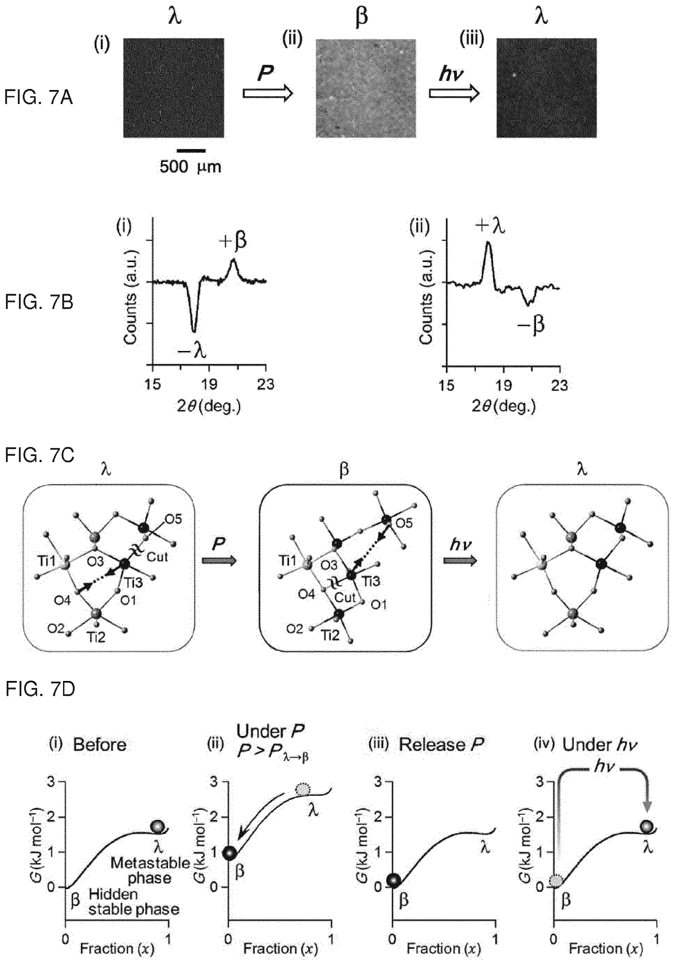

FIG. 7A (i) is a photograph that shows a state of the heat storage/dissipation titanium oxide before applying pressure, FIG. 7A (ii) is a photograph that shows a state of the heat storage/dissipation titanium oxide after applying a pressure P of 2.5 [GPa], and FIG. 7A (iii) is a photograph that shows a state of the heat storage/dissipation titanium oxide after being irradiated with pulsed laser light (pulse width of 6 [ns] and light intensity of 3.0 [mJ $\mu$m$^{-2}$ pulse$^{-1}$]) hv having a wavelength of 532 [nm] as the light for heat storage. It was visually confirmed that the heat storage/dissipation titanium oxide that had had black blue color before applying pressure changed the color into brown-based color when the pressure was applied, and thereafter, by irradiation of the light for heat storage, the color of the heat storage/dissipation titanium oxide turned black blue color that was the same as the color before applying pressure.

When a differential XRD pattern obtained by subtracting FIG. 7A (i) where the heat storage/dissipation titanium oxide had black blue color from FIG. 7A (ii) where the heat storage/dissipation titanium oxide had brown-based color was checked, it was confirmed that, as shown in FIG. 7B (i), the crystal structure changed into the β-phase, and, on the other hand, when the differential XRD pattern obtained by subtracting FIG. 7A (ii) where the heat storage/dissipation titanium oxide had brown-based color from FIG. 7A (iii) where the heat storage/dissipation titanium oxide had black blue color was checked, it was confirmed that, as shown in FIG. 7B (ii), the crystal structure changed into the λ-phase. From these facts, it was confirmed that the crystal structure was the λ-phase that had black blue color before applying pressure, became the β-phase that had brown-based color after applying pressure P, and the color became black blue color that was the same as the color before applying pressure showing that the crystal structure became the λ-phase after the pulsed laser light hv was applied. In addition, when application of pressure and irradiation with the light for heat storage were repeatedly conducted, it was confirmed that the color of the surface of the heat storage/dissipation titanium oxide was changed in the same manner as in FIG. 7A (i) to (iii) and that phase transitions into the β-phase from the λ-phase, into the λ-phase from the β-phase, and, further, into the β-phase from the λ-phase were repeated.

Crystallographic consideration is given to such phase transition as follows: when the pressure P is applied as shown in FIG. 7C, the bond Ti3-05 is broken and the bond Ti3-04 is formed in the phase transition into the β-phase from the λ-phase, and subsequently when the heat storage/dissipation titanium oxide is irradiated with the light for heat storage, the bond Ti3-04 is broken and the bond Ti3-05 is formed again in the reverse phase transition into the λ-phase from the β-phase. In this way, the reversible phase transition is caused by the change in the bonding state of Ti3 due to an external stimulus, such as pressure or photoirradiation.

Moreover, thermodynamic analysis of such reversible phase transition between the λ-phase and the β-phase that is caused by alternate application of pressure and irradiation with light for heat storage is wrapped up as follows: the λ-phase is a metastable state before applying pressure as shown in FIG. 7D (i), however when the pressure is applied, the shape of the curve of Gibbs free energy G versus the fraction x of the charge-delocalized unit is changed as shown in FIG. 7D (ii) and the local portion where the energy is minimum in the λ-phase disappears.

When the pressure applied to the heat storage/dissipation titanium oxide is released, the shape of the curve of the Gibbs free energy G versus the fraction x of the charge-delocalized unit turns back to the original shape before applying pressure and the local portion where the energy is minimum appears again as shown in FIG. 7D (iii), and thereafter when the heat storage/dissipation titanium oxide is irradiated with pulsed laser light as the light for heat storage, the reverse phase transition into the λ-phase from the β-phase is induced exceeding an energy barrier as shown in FIG. 7D (iv). In addition, the optical absorption of the λ-phase is metallic absorption, and therefore it is understood that the light for heat storage from ultraviolet light to infrared light (laser light having a wavelength of 355 to 1064 [nm]) is suitable for the metal-semiconductor transition.

(2) Process for Manufacturing Heat

Storage/Dissipation Material

First of all, an example of a process for manufacturing the heat storage/dissipation titanium oxide will be described hereinafter. In this case, a predetermined amount of a powdered body consisting of nano-sized $TiO_2$ particles is prepared. For example, anatase type $TiO_2$ particles having a particle diameter of about 7 [nm] are used as the $TiO_2$

particles that constitutes the powdered body, and about 3 to 9 [g] of the $TiO_2$ particles are prepared.

Subsequently, sintering treatment of the powdered body consisting of $TiO_2$ particles is conducted at about 1200 [°C] for 1 to 5 hours under hydrogen atmosphere (0.3 to 1.0 [L/min]). By the sintering treatment, powdery heat storage/dissipation titanium oxide having a composition of an oxide containing $Ti^{3+}$ ($Ti_3O_5$) can be produced through reduction reaction of the $TiO_2$ particles. The heat storage/dissipation titanium oxide to be obtained is a powder having a secondary particle diameter of about 2 to 3 $\mu$m, the powder obtained by sintering nanoparticles having a primary particle diameter of about 25 nm. Such a structure can be confirmed by SEM or TEM.

Incidentally, in the sintering treatment, heat storage/dissipation titanium oxide of the $\lambda$-phase can be contained in the produced powder by about 50[%] or more when the hydrogen atmosphere is 0.1 [L/min] or more, the temperature during sintering is 1100 [°C] to 1400 [°C], and the sintering time is 1 hour or longer.

In addition, the heat storage/dissipation titanium oxide can also be produced by, for example, a sol-gel method and sintering treatment. In this case, a solution of a silane compound is appropriately added to a mixed solution in a sol state prepared by mixing a titanium chloride aqueous solution and an ammonia aqueous solution to produce a mixed solution that is in a gel state. In the mixed solution that is in a gel state, silica-coated titanium hydroxide compound particles in which the surface of the titanium hydroxide compound particles is coated with silica can be prepared. Subsequently, heat storage/dissipation titanium oxide can be produced in the silica by conducting washing, drying, and sintering after separating the silica-coated titanium hydroxide compound particles from the mixed solution. Incidentally, in producing the heat storage/dissipation titanium oxide, the silica that coats the heat storage/dissipation titanium oxide may be removed with an alkali solution or the like, such as tetramethyl ammonium hydroxide, and the heat storage/dissipation titanium oxide from which the silica is removed may be used.

Finally, the heat storage/dissipation material can be manufactured by dispersing, in heat transfer oil in a liquid form, such as, for example, silicone oil, ester-based oil, or phenyl ether-based oil, the heat storage/dissipation titanium oxide (including heat storage/dissipation titanium oxide that is coated with silica) thus produced.

(3) Overview of Heat Storage/Dissipation System Making Use of Heat Storage/Dissipation Material

The heat storage/dissipation material according to the present invention contains the heat storage/dissipation titanium oxide so as to be dispersed in, for example, heat transfer oil, the state of storing heat in the heat storage/dissipation titanium oxide is maintained as long as the heat storage/dissipation titanium oxide is not subjected to the pressure or the light for heat dissipation as an external stimulus, the phase transition of the crystal structure of the heat storage/dissipation titanium oxide into the $\beta$-phase from the $\lambda$-phase occurs for the first time at a timing when the contained heat storage/dissipation titanium oxide is subjected to the pressure or the light for heat dissipation and the stored heat can be released. Moreover, as described above, when the heat storage/dissipation material according to the present invention is heated at 460 [K] or higher after releasing heat, or is subjected to the light for heat storage after releasing heat, the crystal structure of the contained heat storage/dissipation titanium oxide changes and the heat storage/dissipation titanium oxide can get into the state of storing heat again.

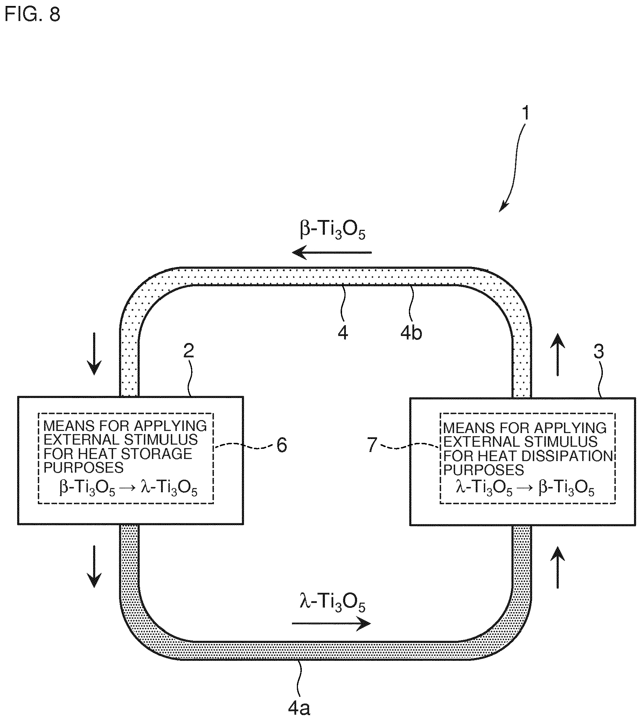

FIG. 8 is a schematic diagram illustrating the constitution of a heat storage/dissipation system that makes use of the properties of such a heat storage/dissipation material capable of repeatedly conduct heat storage and heat dissipation and capable of release heat at a desired timing. As illustrated in FIG. 8, the heat storage/dissipation system 1 includes a heat storage apparatus 2 that applies heat to the heat storage/dissipation material in a liquid form and a heat dissipation apparatus 3 that allows the heat storage/dissipation material to release heat and sends the heat thus obtained to a heat utilization engine that is not illustrated in the figure, and has the constitution in which the heat storage apparatus 2 and the heat dissipation apparatus 3 are connected through a flow channel 4.

Practically, the flow channel 4 includes the first flow channel section 4a leading the heat storage/dissipation material that is discharged from the heat storage apparatus 2 and that is in the state of storing heat to the heat dissipation apparatus 3, and the second flow channel section 4b returning the heat storage/dissipation material after heat dissipation that is discharged from the heat dissipation apparatus 3 to the heat storage apparatus 2, and is made so that the heat storage/dissipation material can be circulated repeatedly between the heat storage apparatus 2 and the heat dissipation apparatus 3. In addition, the first flow channel section 4a and the second flow channel section 4b are each formed in a tube shape so that the heat storage/dissipation material can flow inside.

In the case of this embodiment, the heat storage apparatus 2 includes means 6 for applying an external stimulus for heat storage purposes, applies heat to the heat storage/dissipation material by the means 6 for applying an external stimulus for heat storage purposes, and can make the heat storage/dissipation material get into the state of storing heat. As the means 6 for applying an external stimulus for heat storage purposes, various kinds of means for applying an external stimulus for heat storage purposes may be employed as long as a heat of 460 [K] or more can be applied to the heat storage/dissipation material, and, for example, means for heating by sunlight, in which the heat storage/dissipation material is heated by irradiation with sunlight, or means for heating by waste heat, in which the heat storage/dissipation material is heated by waste heat from a blast furnace, can also be used.

For example, in the means for heating by sunlight, which makes use of sunlight as a heat source, the flow channel 4 (second flow channel section 4b) is provided on a reflecting plate that reflects the sunlight so as to meander on the reflecting plate, and the heat storage/dissipation material is heated at 460 [K] or higher by applying the sunlight collected by the reflecting plate to the heat storage/dissipation material in the flow channel 4 (second flow channel section 4b) to cause the phase transition of the heat storage/dissipation titanium oxide contained in the heat storage/dissipation material into the $\alpha$-phase from the $\beta$-phase, and thereafter the heat storage/dissipation material is able to get into the state of storing heat by the phase transition into the $\lambda$-phase from the $\alpha$-phase caused by cooling.

On the other hand, for example, in the means for heating by waste heat, which makes use of a blast furnace as a heat source, the flow channel 4 is provided along a side wall of the blast furnace, the heat storage/dissipation material is heated by conveying the heat from the blast furnace to the heat storage/dissipation material in the flow channel 4 (second flow channel section 4b) to cause the phase transition of the heat storage/dissipation titanium oxide contained in the heat storage/dissipation material into the $\alpha$-phase from the $\beta$-phase, and thereafter the heat storage/dissipation material is able to get into the state of storing heat by the phase transition into the $\lambda$-phase from the $\alpha$-phase caused by cooling.

In addition, in the above-described embodiment, the case where the means for applying an external stimulus for heat storage purposes, which makes the heat storage/dissipation material get into the state of storing heat by heating, is employed has been described, however the present invention is not limited to the case, and the means for applying an external stimulus for heat storage purposes, which makes the heat storage/dissipation material get into the state of storing heat by irradiation with light for heat storage, may be employed.

In this case, the heat storage/dissipation system is provided with means for applying light for heat storage, with which the heat storage/dissipation material is irradiated with the light for heat storage, as means for applying an external stimulus for heat storage purposes, and the heat storage/dissipation material is able to get into the state of storing heat by causing the phase transition of the heat storage/dissipation titanium oxide contained in the heat storage/dissipation material into the $\lambda$-phase from the $\beta$-phase by irradiating the heat storage/dissipation material after dissipating heat, which is fed from the heat dissipation apparatus 3, with the light for heat storage, such as ultraviolet light, visible light, and infrared light (light intensity of $0.5 \times 10^2$ to $15 \times 10^2$ [mJ cm$^{-2}$ pulse$^{-1}$], more preferably $1 \times 10^2$ to $10 \times 10^2$ [mJ cm$^{-2}$ pulse$^{-1}$]). In the case where the means for applying light for heat storage is used in this way, the heat storage/dissipation material may only be irradiated with the light for heat storage, and therefore the heat storage/dissipation material is able to get into the state of storing heat at room temperature.

The heat storage/dissipation material that entered the state of storing heat in this way is fed from the heat storage apparatus 2 to the heat dissipation apparatus 3 through the first flow channel section 4a. The heat dissipation apparatus 3 is provided with means 7 for applying an external stimulus for heat dissipation purposes, which applies, for example, pressure as the external stimulus to the heat storage/dissipation material, and applies pressure to the heat storage/dissipation material to cause the phase transition of the heat storage/dissipation titanium oxide in the heat storage/dissipation material into the $\beta$-phase from the $\lambda$-phase, thereby enabling the heat storage/dissipation material to release heat .

Practically, the means 7 for applying external stimulus for heat dissipation purposes, which applies pressure as the external stimulus, stores the heat storage/dissipation material in a container section for example, and thereafter applies pressure to the heat storage/dissipation material in the container with the use of a pressing section, to apply a pressure of 0.4 [GPa] or more to the heat storage/dissipation titanium oxide contained in the heat storage/dissipation material, thereby causing the phase transition of the heat storage/dissipation titanium oxide into the $\beta$-phase from the $\lambda$-phase and causing the heat stored in the heat storage/dissipation titanium oxide to be released. Thus, the heat dissipation apparatus 3 is capable of applying pressure to the heat storage/dissipation material at a desired timing to allow the heat storage/dissipation material to release heat when necessary.

In addition, in the above-described embodiment, the case where the means for applying an external stimulus for heat dissipation purposes, which applies pressure to allow the heat storage/dissipation material to release heat, is employed has been described, however the present invention is not limited to the case. For example, the means for applying light for heat dissipation, with which the heat storage/dissipation material is irradiated with light for heat dissipation, such as ultraviolet light, visible light, and infrared light (light intensity of $5 \times 10^2$ to $30 \times 10^2$ [mJ cm$^{-2}$ pulse$^{-1}$], more preferably $6 \times 10^2$ to $20 \times 10^2$ [mJ cm$^{-2}$ pulse$^{-1}$]), may be employed as the means for applying an external stimulus for heat dissipation purposes.

In this case, the means for applying light for heat dissipation can release the heat stored in the heat storage/dissipation titanium oxide, when necessary, by irradiating the heat storage/dissipating material with the light for heat dissipation at a desired timing to cause the phase transition of the heat storage/dissipation titanium oxide contained in the heat storage/dissipation material into the $\beta$-phase from the $\lambda$-phase.

The heat storage/dissipation material that has dissipated the heat in this way is fed from the heat dissipation apparatus 3 to the heat storage apparatus 2 again through the second flow channel section 4b, and can get into the state of storing heat again by the means 6 for applying an external stimulus for heat storage purposes. In this way, the heat storage/dissipation system 1 is capable of allowing the heat storage/dissipation material to release heat at a desired timing by repeatedly conducting heat storage and heat dissipation from the heat storage/dissipation material and applying an external stimulus to the heat storage/dissipation material in the heat dissipation apparatus 3 as necessary.

(4) Action and Effects

In the above-described constitution, the heat storage/dissipation titanium oxide that does not undergo phase transition into the β-phase that has properties of a non-magnetic semiconductor and maintains a state of a paramagnetic metal as long as the heat storage/dissipation titanium oxide is not subjected to the pressure or the light for heat dissipation and consists of $Ti_3O_5$, is contained in the heat storage/dissipation material so as to be dispersed in heat transfer oil in a liquid form. And the heat storage/dissipation material can release stored heat by the phase transition of the heat storage/dissipation titanium oxide into the β-phase when the heat storage/dissipation titanium oxide is subjected to the pressure or the light for heat dissipation as the external stimulus, and therefore can release stored heat at a desired timing.

Moreover, after the heat dissipation, the heat storage/dissipation material can store heat again by heating the heat storage/dissipation titanium oxide contained in the heat transfer oil at 460 [K] or higher, and therefore can repeatedly conduct heat storage and heat dissipation. Furthermore, the heat storage/dissipation material can store heat again also by irradiating the heat storage/dissipation titanium oxide with the light for heat storage having a particular wavelength when the heat storage/dissipation titanium oxide is in the β-phase after heat dissipation, and therefore heat can be stored only by photoirradiation without heating.

Moreover, the heat storage/dissipation system 1 that makes use of such a heat storage/dissipation material is provided with the heat storage apparatus 2 that makes the heat storage/dissipation material get into the state of storing heat, the heat dissipation apparatus 3 that allows the heat storage/dissipation material to release heat by applying an external stimulus to the heat storage/dissipation material, and the flow channel 4 in which the heat storage/dissipation material can be repeatedly circulated between the heat storage apparatus 2 and the heat dissipation apparatus 3. Thereby, the heat dissipation apparatus 3 is capable of allowing the heat storage/dissipation material to release heat at a desired timing by applying an external stimulus at the desired timing to the heat storage/dissipation material that is fed from the heat storage apparatus 2 and is in the state of storing heat, with the means 7 for applying an external stimulus for heat dissipation purposes. Moreover, in the heat storage/dissipation system 1, the heat storage with the heat storage apparatus 2 and the heat dissipation with the heat dissipation apparatus 3 are repeatedly performed by repeatedly circulating the heat storage/dissipation material between the heat storage apparatus 2 and the heat dissipation apparatus 3 through the flow channel 4.

According to the above-described constitution, the heat storage/dissipation material contains heat storage/dissipation titanium oxide that is in the λ phase at room temperature, in which phase the state of storing heat can be maintained, and that releases the stored heat by the phase transition into the β-phase from the λ-phase caused by application of the pressure or the light for heat dissipation. Thereby, application of the pressure or the light for heat dissipation to the heat storage/dissipation material at a desired timing causes the heat storage/dissipation titanium oxide to undergo the phase transition into the β-phase from the λ-phase, to allow the heat storage/dissipation material to release the heat at the desired timing.

An example of the heat storage/dissipation titanium oxide using anatase type titanium oxide as a starting material has been described above, however the heat storage/dissipation titanium oxide is not limited to the example. The properties, such as phase transition pressure, of the heat storage/dissipation titanium oxide to be obtained can be changed depending on the particle diameter and sintering conditions of anatase type $TiO_2$ particles used as a starting material.

(5) Modification Examples

The heat storage/dissipation titanium oxide in the present invention may be heat storage/dissipation titanium oxide using rutile type titanium oxide as a starting material.

In the case where the rutile type titanium oxide is used as a starting material as well as the case where the anatase type titanium oxide is used as a starting material, the heat storage/dissipation titanium oxide of the λ-phase can be contained in the produced powder by about 50 [%] or more when the hydrogen atmosphere is 0.1 [L/min] or more, the temperature during sintering is 1100 [°C] to 1400 [°C], and the sintering time is 1 hour or longer. For example, in the case where the rutile type $TiO_2$ particles having a particle diameter of about 500 nm are used, powder-shaped heat storage/dissipation titanium oxide which has a size of a secondary particle diameter of about $4 \times 1$ μm and in which stripe type nanoparticles having a primary particle size of about 200 nm $\times$ 30 nm are sintered is obtained. Such a structure can be confirmed by SEM and TEM.

It was confirmed that the heat storage/dissipation titanium oxide using rutile type titanium oxide as a starting material undergoes the phase transition into the β-phase from the λ-phase at a pressure of 60 [MPa]. As a result of DSC measurement during the phase transition into the $\lambda$-phase from the $\beta$-phase, the amount of stored heat was 12 kJ/mol. The amount of stored heat, when converted, is 230 kJ/L, which corresponds to about 70% of energy of ice-water phase transition as solid-to-liquid melting phase transition. Moreover, the amount of heat dissipated from the $\lambda$-phase to the $\beta$-phase was estimated as 220 kJ/L based on the amount of dissipated heat measured by applying a pressure of 40 [MPa] at room temperature. In this way, it is understood that the heat storage/dissipation titanium oxide using rutile type titanium oxide as a starting material has more excellent properties than the heat storage/dissipation titanium oxide using anatase type titanium oxide as a starting material.

The shape of primary particles of the heat storage/dissipation titanium oxide using rutile type titanium oxide as a starting material, which is different from that of the heat storage/dissipation titanium oxide using anatase type titanium oxide as a starting material, is a stripe type. It is inferred that the difference in the way how the stress was applied to the interface due to such difference in shapes is one of the reasons that brought about improvements in properties.

Basically, the heat storage and the heat dissipation from the heat storage/dissipation titanium oxide using rutile type titanium oxide as a starting material can occur by use of the same means as in the case of the heat storage/dissipation titanium oxide using anatase type titanium oxide as a starting material. That is to say, the phase transition into the $\beta$-phase from the $\lambda$-phase occurs and the heat is dissipated also in a case where the heat storage/dissipation titanium oxide is irradiated with $5 \times 10^2$ to $30 \times 10^2$ [mJ cm$^{-2}$ pulse$^{-1}$] of the light for heat dissipation, in addition to the case where a predetermined pressure is applied.

Moreover, the heat storage/dissipation titanium oxide using rutile type titanium oxide as a starting material stores heat when irradiated with the light for heat storage to have a temperature of 460 [K] or higher, thereafter undergoes the phase transition into the $\lambda$-phase at lower than 460 [K], and can maintain the state of latently storing heat even in a situation where the temperature becomes low. In addition to this, the heat storage/dissipation titanium oxide using rutile type titanium oxide as a starting material undergoes the phase transition of the crystal structure into the $\lambda$-phase from the $\beta$-phase also when subjected to the light for heat storage, such as ultraviolet light, visible light, and infrared light (light intensity of $0.5 \times 10^2$ to $15 \times 10^2$ [mJ cm$^{-2}$ pulse$^{-1}$], more preferably $1 \times 10^2$ to $10 \times 10^2$ [mJ cm$^{-2}$ pulse$^{-1}$]), and, further, can get into the state of storing heat based on the energy received from the light for heat storage.

Furthermore, the heat storage/dissipation titanium oxide using rutile type titanium oxide as a starting material can store heat by the phase transition into the $\lambda$-phase from the $\beta$-phase caused by applying a current of 0.4 [A·mm$^{-2}$].

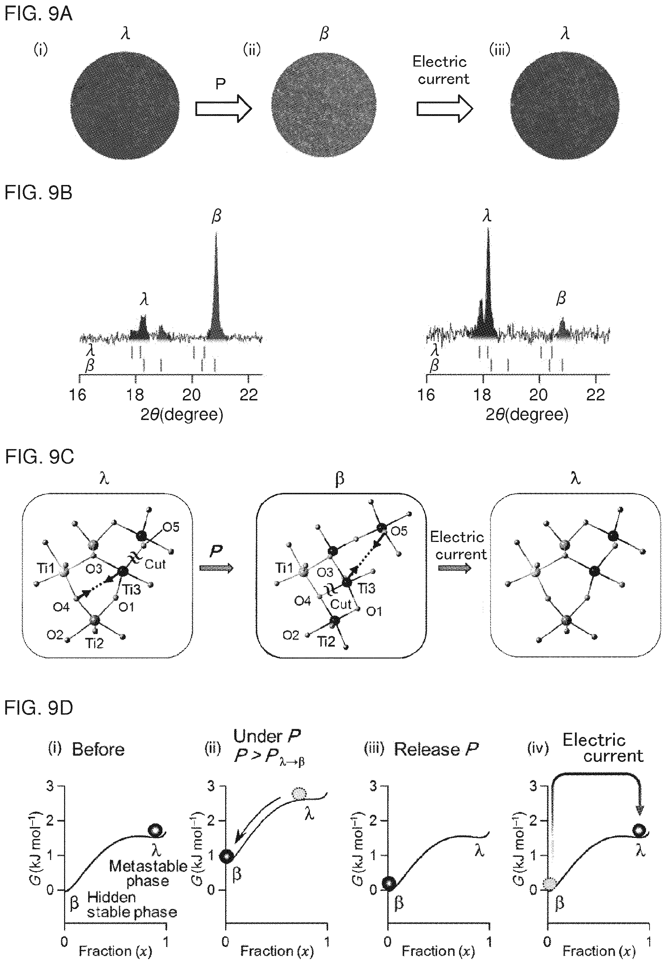

FIG. 9A (i) is a photograph that shows a state of the heat storage/dissipation titanium oxide before applying a current, FIG. 9A (ii) is a photograph that shows a state of the heat storage/dissipation titanium oxide after a pressure P of 510 [MPa] is applied, and FIG. 9A (iii) is a photograph that shows a state of the heat storage/dissipation titanium oxide after a current of 0.4 [A·mm$^{-2}$] is applied. It was visually confirmed that the heat storage/dissipation titanium oxide that had had black blue color before applying pressure changed the color into brown-based color when the pressure was applied, and thereafter, by application of current, the color of the heat storage/dissipation titanium oxide turned black blue color that was the same as the color before applying pressure.

When the XRPD pattern shown in FIG. 9A (ii) where the heat storage/dissipation titanium oxide had brown-based color was checked, it was confirmed that, as shown in FIG. 9B (i), the crystal structure was a crystal structure of the $\beta$-phase, and, on the other hand, when the XRPD pattern shown in FIG. 9A (iii) where the heat storage/dissipation titanium oxide had black blue color was checked, it was confirmed that, as shown in FIG. 9B (ii), the crystal structure changed into the $\lambda$-phase. From these facts, it was confirmed that the crystal structure was the $\lambda$-phase that had black blue color before applying pressure, and became the $\beta$-phase that had brown-based color after applying pressure P, and the color became black blue color that was the same as the color before applying pressure and the crystal structure became the $\lambda$-phase after the current was applied.

Crystallographic consideration is given to such phase transition as follows: when the pressure P is applied as shown in FIG. 9C, the bond Ti3-05 is broken and the bond Ti3-04 is formed in the phase transition into the $\beta$-phase from the $\lambda$-phase, and, subsequently when the current is applied, the bond Ti3-04 is broken and the bond Ti3-05 is formed again in the reverse phase transition into the $\lambda$-phase from the $\beta$-phase. In this way, the reversible phase transition is caused by the change in the bonding state of Ti3 due to an external stimulus, such as pressure or current.

Moreover, thermodynamic analysis of such reversible phase transition between the $\lambda$-phase and the $\beta$-phase that is caused by alternate application of pressure and supply of current is wrapped up as follows: the $\lambda$-phase is a metastable state before applying pressure as shown in FIG. 9D (i), however when the pressure is applied, the shape of the curve of Gibbs free energy G versus the fraction x of the charge-delocalized unit is changed as shown in FIG. 9D (ii) and the local portion where the energy is minimum in the $\lambda$-phase disappears.

When the pressure applied to the heat storage/dissipation titanium oxide is released, the shape of the curve of the Gibbs free energy G versus the fraction x of the charge-delocalized unit turns back to the original shape before applying pressure and the local portion where the energy is minimum appears again as shown in FIG. 9D (iii), and then when the current flows through the heat storage/dissipation titanium oxide, the reverse phase transition into the $\lambda$-phase from the $\beta$-phase is induced exceeding an energy barrier as shown in FIG. 9D (iv).

The properties, such as phase transition pressure, of the heat storage/dissipation titanium oxide to be obtained can be changed depending on the particle diameter and sintering conditions of rutile type $TiO_2$ particles used as a starting material also in the case where the rutile type titanium oxide is used as a starting material, in the same manner as in the case where the anatase type titanium oxide is used as a starting material, and the properties are not limited to the above-described examples.

(6) Other Embodiments

It is to be noted that the present invention is not limited to the present embodiments and various modified embodiments are possible within the scope of the subject matter of the present invention. For example, in the above-described embodiments, the case where the heat storage/dissipation titanium oxide is dispersed in the heat transfer oil in a liquid form has been described, however the present invention is not limited to this case, and the heat storage/dissipation titanium oxide may be dispersed in a heat transfer member in a solid powder form, such as silicon carbide, silicon nitride, aluminum nitride, and alumina.

Moreover, in the above-described embodiments, the heat storage/dissipation material in which the heat storage/dissipation titanium oxide is dispersed in a heat transfer member in a liquid form or a solid powder form has been described as the heat storage/dissipation material containing heat storage/dissipation titanium oxide, however the present invention is not limited to the heat storage/dissipation material, and a heat storage/dissipation material consisting of only heat storage/dissipation titanium oxide may also be used without dispersing the heat storage/dissipation titanium oxide in the heat transfer member in a liquid form or a solid powder form. Moreover, in addition to the heat storage/dissipation material in a powder form consisting of only heat storage/dissipation titanium oxide, the heat storage/dissipation material may be a heat storage/dissipation material obtained by solidifying heat storage/dissipation titanium oxide into one of various shapes, such as a block form.

Furthermore, in the above-described embodiments, the heat storage/dissipation system 1 in which the heat storage apparatus 2 and the heat dissipation apparatus 3 are connected through the flow channel 4 has been described. The heat storage apparatus 2 and the heat dissipation apparatus 3 may be installed independently at other places without being connected to each other through the flow channel 4. That is to say, the heat storage/dissipation material can maintain the state of storing heat as it is even after the elapse of time as long as an external stimulus is not applied, and therefore even though the heat dissipation apparatus 3 is installed at another place away from the place where the heat storage apparatus 2 is installed and transportation of the heat storage/dissipation material from the heat storage apparatus 2 to the heat dissipation apparatus 3 by transportation means such as, for example, a vehicle takes time, heat can be released from the heat storage/dissipation material with the heat dissipation apparatus 3.

Reference Signs List

1    Heat storage/dissipation system
2    Heat storage apparatus
3    Heat dissipation apparatus

**Claims**

1.  A use of a heat storage/dissipation material containing $\lambda$-$Ti_3O_5$ as a heat storage/dissipation titanium oxide, wherein the $\lambda$-$Ti_3O_5$ does not undergo a phase transition into a $\beta$-phase that has properties of a non-magnetic semiconductor and wherein the $\lambda$-$Ti_3O_5$ maintains a state of a paramagnetic metal as long as the $\lambda$-$Ti_3O_5$ is not subjected to pressure or light for heat dissipation, and
    wherein an application of pressure or light to the material causes a phase transition of the $\lambda$-$Ti_3O_5$ into the $\beta$-phase, thereby releasing heat stored in the $\lambda$-$Ti_3O_5$.

2.  A method for storing/dissipating heat comprising:

    using a heat storage/dissipation material containing $\lambda$-$Ti_3O_5$ as a heat storage/dissipation titanium oxide, wherein the $\lambda$-$Ti_3O_5$ does not undergo a phase transition into a $\beta$-phase that has properties of a non-magnetic semiconductor and wherein the $\lambda$-$Ti_3O_5$ maintains a state of a paramagnetic metal as long as the $\lambda$-$Ti_3O_5$ is not subjected to pressure or light for heat dissipation, and
    wherein an application of pressure or light to the material causes a phase transition of the $\lambda$-$Ti_3O_5$ into the $\beta$-phase thereby releasing heat stored in the $\lambda$-$Ti_3O_5$.

3. The use of the heat storage/dissipation material according to claim 1 or the method according to claim 2, wherein the heat storage/dissipation titanium oxide is dispersed in a heat transfer member in a liquid form or a solid powder form.

4. The use or method according to one of the previous claims, wherein the heat storage/dissipation titanium oxide stores heat by being heated at 460 [K] or higher.

5. The use or method according to one of the previous claims, wherein the heat storage/dissipation titanium oxide stores heat by being irradiated with light for heat storage having a particular wavelength when the $\lambda$-Ti$_3$O$_5$ has undergone a transition into the $\beta$-phase.

6. The use or method according to one of the previous claims, wherein the $\lambda$-Ti$_3$O$_5$ is obtained using anatase type titanium oxide as a starting material and the pressure is 0.4 [GPa] or more.

7. The use or method according to any one of claims 1 to 5, wherein the $\lambda$-Ti$_3$O$_5$ is obtained using rutile type titanium oxide as a starting material and the pressure is 60 [MPa] or more.

8. The use or method according to any one of claims 1 to 5, wherein the light for heat dissipation has a light intensity of $5 \times 10^2$ to $30 \times 10^2$ [mJ cm$^{-2}$ pulse$^{-1}$].

9. The use or method according to claim 5, wherein the light for heat storage irradiating the $\beta$-phase has a light intensity of $0.5 \times 10^2$ to $15 \times 10^2$ [mJ cm$^{-2}$ pulse$^{-1}$].

10. A heat storage/dissipation system comprising:

a heat storage apparatus heating the heat storage/dissipation material as specified in one of claims 1 to 9 or irradiating the heat storage/dissipation material as specified in one of claims 1 to 9 with light for heat storage to store heat in the heat storage/dissipation material;
a heat dissipation apparatus applying pressure to or irradiating, with light for heat dissipation, the heat storage/dissipation material storing the heat caused by the heat storage apparatus, to allow the heat storage/dissipation material to release the heat; and
a flow channel feeding the heat storage/dissipation material discharged from the heat storage apparatus to the heat dissipation apparatus; and returning the heat storage/dissipation material discharged from the heat dissipation apparatus to the heat storage apparatus, the heat storage/dissipation material having a constitution wherein heat storage/dissipation titanium oxide is dispersed in a heat transfer member in a liquid form.

**Patentansprüche**

1. Verwendung eines Wärmespeicherungs-/Ableitungsmaterials, das $\lambda$-Ti$_3$O$_5$ enthält, als Wärmespeicherungs-/Ableitungs-Titanoxid, wobei das $\lambda$-Ti$_3$O$_5$ keinen Phasenübergang in eine $\beta$-Phase durchläuft, die Eigenschaften eines nichtmagnetischen Halbleiters aufweist, und wobei das $\lambda$-Ti$_3$O$_5$ einen Zustand eines paramagnetischen Metalls beibehält, solang das $\lambda$-Ti$_3$O$_5$ keinem Druck oder Licht zur Wärmeableitung ausgesetzt wird, und wobei ein Anlegen von Druck oder Licht an das Material einen Phasenübergang des $\lambda$-Ti$_3$O$_5$ in die $\beta$-Phase bewirkt, wodurch die in dem $\lambda$-Ti$_3$O$_5$ gespeicherte Wärme abgegeben wird.

2. Verfahren zum Speichern/Ableiten von Wärme, umfassend:

Verwenden eines Wärmespeicherungs-/Ableitungsmaterials, das A-$\lambda$-Ti$_3$O$_5$ enthält, als Wärmespeicherungs-/Ableitungs-Titanoxid, wobei das $\lambda$-Ti$_3$O$_5$ keinen Phasenübergang in eine $\beta$-Phase durchläuft, die Eigenschaften eines nichtmagnetischen Halbleiters aufweist, und wobei das $\lambda$-Ti$_3$O$_5$ einen Zustand eines paramagnetischen Metalls beibehält, solang das $\lambda$-Ti$_3$O$_5$ keinem Druck oder Licht zur Wärmeableitung ausgesetzt wird, und wobei ein Anlegen von Druck oder Licht an das Material einen Phasenübergang des $\lambda$-Ti$_3$O$_5$ in die $\beta$-Phase bewirkt, wodurch die in dem $\lambda$-Ti$_3$O$_5$ gespeicherte Wärme abgegeben wird.

3. Verwendung des Wärmespeicherungs-/Ableitungsmaterials nach Anspruch 1 oder Verfahren nach Anspruch 2, wobei das Wärmespeicherungs-/Ableitungs-Titanoxid in einem Wärmeübertragungsglied in einer flüssigen Form oder einer festen Pulverform dispergiert ist.

4. Verwendung oder Verfahren nach einem der vorhergehenden Ansprüche, wobei das Wärmespeicherungs-/Ableitungs-Titanoxid Wärme speichert, indem es auf 460 [K] oder darüber erwärmt wird.

5. Verwendung oder Verfahren nach einem der vorhergehenden Ansprüche, wobei das Wärmespeicherungs-/Ableitungs-Titanoxid Wärme speichert, indem es mit Licht zur Wärmespeicherung bestrahlt wird, das eine spezielle Wellenlänge aufweist, wenn das $\lambda$-$Ti_3O_5$ einen Übergang in die $\beta$-Phase durchlaufen hat.

6. Verwendung oder Verfahren nach einem der vorhergehenden Ansprüche, wobei das $\lambda$-$Ti_3O_5$ erhalten wird, indem Titanoxid vom Anatas-Typ als Ausgangsmaterial verwendet wird und der Druck 0,4 [GPa] oder mehr ist.

7. Verwendung oder Verfahren nach einem der Ansprüche 1 bis 5, wobei das $\lambda$-$Ti_3O_5$ erhalten wird, indem Titanoxid vom Rutil-Typ als Ausgangsmaterial verwendet wird und der Druck 60 [MPa] oder mehr ist.

8. Verwendung oder Verfahren nach einem der Ansprüche 1 bis 5, wobei das Licht zur Wärmeableitung eine Lichtintensität von $5 \times 10^2$ bis $30 \times 10^2$ [mJ cm$^{-2}$ Puls$^{-1}$] aufweist.

9. Verwendung oder Verfahren nach Anspruch 5, wobei das Licht zur Wärmespeicherung, mit dem die $\beta$-Phase bestrahlt wird, eine Lichtintensität von $0,5 \times 10^2$ bis $15 \times 10^2$ [mJ cm$^{-2}$ Puls$^{-1}$] aufweist.

10. Wärmespeicherungs-/Ableitungssystem, umfassend:

eine Wärmespeicherungsvorrichtung, welche das Wärmespeicherungs-/Ableitungsmaterial nach einem der Ansprüche 1 bis 9 erwärmt oder das Wärmespeicherungs-/Ableitungsmaterial nach einem der Ansprüche 1 bis 9 mit Licht zur Wärmespeicherung bestrahlt, um Wärme in dem Wärmespeicherungs-/Ableitungsmaterial zu speichern;
eine Wärmeableitungsvorrichtung, die das Wärmespeicherungs-/Ableitungsmaterial, das die durch die Wärmespeicherungsvorrichtung verursachte Wärme speichert, mit Druck beaufschlagt oder mit Licht für Wärmeableitung bestrahlt, um es dem Wärmespeicherungs-/Ableitungsmaterial zu ermöglichen, die Wärme abzugeben; und
einen Strömungskanal, der das aus der Wärmespeicherungsvorrichtung ausgegebene Wärmespeicherungs-/Ableitungsmaterial der Wärmeableitungsvorrichtung zuführt; und der das aus der Wärmeableitungsvorrichtung ausgegebene Wärmespeicherungs-/Ableitungsmaterial der Wärmespeicherungsvorrichtung zuführt, wobei das Wärmespeicherungs-/Ableitungsmaterial eine derartige Beschaffenheit aufweist, dass das Wärmespeicherungs-/Ableitungs-Titanoxid in einem Wärmeübertragungsglied in einer flüssigen Form dispergiert ist.

## Revendications

1. Utilisation d'un matériau de stockage/dissipation de chaleur contenant $\lambda$-$Ti_3O_5$ en tant qu'oxyde de titane destiné au stockage/à la dissipation de chaleur, dans laquelle le $\lambda$-$Ti_3O_5$ ne subit pas de transition de phase en une phase $\beta$ qui présente des propriétés d'un semi-conducteur non magnétique et dans laquelle le $\lambda$-$Ti_3O_5$ maintient un état d'un métal paramagnétique du moment que le $\lambda$-$Ti_3O_5$ n'est pas soumis à une pression ou à une lumière destinée à une dissipation de chaleur, et
dans laquelle une application de pression ou de lumière sur le matériau provoque une transition de phase du $\lambda$-$Ti_3O_5$ en phase $\beta$, libérant ainsi la chaleur stockée dans le $\lambda$-$Ti_3O_5$.

2. Procédé de stockage/dissipation de chaleur comprenant :

l'utilisation d'un matériau de stockage/dissipation de chaleur contenant $\lambda$-$Ti_3O_5$ en tant qu'oxyde de titane destiné au stockage/à la dissipation de chaleur dans laquelle le $\lambda$-$Ti_3O_5$ ne subit pas de transition de phase en une phase $\beta$ qui présente des propriétés d'un semi-conducteur non magnétique et dans laquelle le $\lambda$-$Ti_3O_5$ maintient un état d'un métal paramagnétique du moment que le $\lambda$-$Ti_3O_5$ n'est pas soumis à une pression ou à une lumière destinée à une dissipation de chaleur, et
dans laquelle une application de pression ou de lumière sur le matériau provoque une transition de phase du $\lambda$-$Ti_3O_5$ en phase $\beta$, libérant ainsi la chaleur stockée dans le $\lambda$-$Ti_3O_5$.

**3.** Utilisation du matériau de stockage/dissipation selon la revendication 1 ou procédé selon la revendication 2, l'oxyde de titane destiné au stockage/à la dissipation de chaleur étant dispersé dans un élément de transfert de chaleur sous une forme liquide ou sous une forme de poudre solide.

**4.** Utilisation ou procédé selon l'une quelconque des revendications précédentes, l'oxyde de titane destiné au stockage/à la dissipation de chaleur stockant de la chaleur en étant chauffé à 460 [K] ou plus.

**5.** Utilisation ou procédé selon l'une quelconque des revendications précédentes, l'oxyde de titane destiné au stockage/à la dissipation de chaleur stockant de la chaleur en étant irradié avec de la lumière destinée au stockage de chaleur ayant une longueur d'onde particulière lorsque le $\lambda$-Ti$_3$O$_5$ a subi une transition dans la phase $\beta$.

**6.** Utilisation ou procédé selon l'une quelconque des revendications précédentes, le $\lambda$-Ti$_3$O$_5$ étant obtenu en utilisant de l'oxyde de titane de type anatase en tant que produit de départ et la pression étant de 0,4 [Gpa] ou plus.

**7.** Utilisation ou procédé selon l'une quelconque des revendications 1 à 5, le $\lambda$-Ti$_3$O$_5$ étant obtenu en utilisant de l'oxyde de titane de type rutile en tant que produit de départ et la pression étant de 60 [Mpa] ou plus.

**8.** Utilisation ou procédé selon l'une quelconque des revendications 1 à 5, la lumière destinée à la dissipation de chaleur ayant une intensité de lumière comprise entre 5 x 10$^2$ et 30 x 10$^2$ [mJ cm$^2$ pulsation$^{-1}$].

**9.** Utilisation ou procédé selon la revendication 5, la lumière destinée au stockage de chaleur irradiant la phase $\beta$ ayant une intensité de lumière comprise entre 0,5 x 10$^2$ et 15 x 10$^2$ [mJ cm$^{-2}$ pulsation$^{-1}$].

**10.** Système de stockage/dissipation de chaleur comprenant :

un appareil de stockage de chaleur chauffant le matériau de stockage/dissipation de chaleur tel que spécifié dans l'une quelconque des revendications 1 à 9 ou irradiant le matériau de stockage/dissipation de chaleur tel que spécifié dans l'une quelconque des revendications 1 à 9 avec une lumière destinée au stockage de chaleur afin de stocker de la chaleur dans le matériau de stockage/dissipation de chaleur;

un appareil de dissipation de chaleur appliquant une pression sur ou irradiant, à l'aide d'une lumière destinée à la dissipation de chaleur, le matériau de stockage/dissipation de chaleur stockant la chaleur provoquée par l'appareil de stockage de chaleur, pour permettre au matériau de stockage/dissipation de chaleur de libérer la chaleur ; et

un canal d'écoulement alimentant le matériau de stockage/dissipation de chaleur déchargé de l'appareil de stockage de chaleur vers l'appareil de dissipation de chaleur ; et permettant de retourner le matériau de stockage/dissipation de chaleur déchargé de l'appareil de dissipation de chaleur vers l'appareil de stockage de chaleur, le matériau de stockage/dissipation de chaleur ayant une constitution dans laquelle de l'oxyde de titane destiné au stockage/à la dissipation de chaleur est dispersé dans un élément de transfert de chaleur sous une forme liquide.

FIG. 1

FIG. 2A

FIG. 2B

FIG. 2C

FIG. 3A    FIG.3B    FIG. 3C

17

FIG. 4A

FIG. 4B

FIG. 4C

FIG. 5

FIG. 6A

FIG. 6B

FIG. 6C

FIG. 7A

500 μm

FIG. 7B

FIG. 7C

FIG. 7D

(i) Before    (ii) Under $P$ $P > P_{\lambda \rightarrow \beta}$    (iii) Release $P$    (iv) Under $h\nu$

FIG. 8

$\beta\text{-Ti}_3\text{O}_5$

1

4   4b

2   3

| MEANS FOR APPLYING EXTERNAL STIMULUS FOR HEAT STORAGE PURPOSES $\beta\text{-Ti}_3\text{O}_5 \rightarrow \lambda\text{-Ti}_3\text{O}_5$ | 6   7 | MEANS FOR APPLYING EXTERNAL STIMULUS FOR HEAT DISSIPATION PURPOSES $\lambda\text{-Ti}_3\text{O}_5 \rightarrow \beta\text{-Ti}_3\text{O}_5$ |

$\lambda\text{-Ti}_3\text{O}_5$

4a

EP 3 053 981 B1

FIG. 9A

FIG. 9B

FIG. 9C

FIG. 9D

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• EP 2371767 B1

**Non-patent literature cited in the description**

• Thermal Properties of Concrete. Sumitomo Osaka Cement Co., Ltd, 01 October 2013